# EUROPEAN PATENT APPLICATION

(11) **EP 4 682 806 A1**
(43) Date of publication of application: **21.01.2026**
(21) Application number: 25190070.0
(22) Date of filing: 17.07.2025
(51) Int. Cl.: G06Q 30/0201, G06Q 50/16, G06Q 50/163, G06Q 50/18

(54) **REAL ESTATE TRANSACTION SYSTEM**

(30) Priority: 18.07.2024 TW 113126980; 16.04.2025 TW 114114403
(71) Applicant: Li, Yu-Wei, Taipei City 111073 (TW)
(72) Inventor: Li, Yu-Wei, Taipei City 111073 (TW)
(74) Representative: Straus, Alexander

(57) **Abstract**

A real estate transaction system that facilitates integrated real estate transactions by enabling a seller to list a property at a specified price with negotiation parameters, and allowing a buyer to submit offers for those properties. The system supports direct online negotiations where buyers and sellers can place offers and counteroffers in real time. A matching module optimally matches buyers and sellers with real estate agents based on property information, user preferences, agent performance ratings, and geographic location. The system includes a user interface module providing a graphical interface for users to interact with the transaction and matching modules. A data analysis module accesses and analyzes real estate transaction price data from government sources to generate price trend analyses that assist in accurate pricing.

## Description

### FIELD OF THE DISCLOSURE

This invention relates to the field of real estate transactions, and more particularly to a system that facilitates direct online offer and counteroffer exchanges between buyers and sellers in a fully digital environment, while providing additional supportive services.

### BACKGROUND OF THE INVENTION

Traditionally, real estate transactions have long been cumbersome, time-consuming, and inefficient due to their reliance on manual processes, extensive paperwork, and the need for in-person meetings. These transactions typically involve multiple parties-including buyers, sellers, real estate agents, banks, and legal advisors-each additional party adding complexity and potential delays. Traditional real estate brokerage systems involve face-to-face meetings, property showings, and paper-based document handling. Buyers and sellers usually must work through intermediaries, such as agents (real estate brokers), to list properties, schedule showings, and negotiate prices. This process is not only slow but also raises issues of transparency and fairness. Agents often possess specific information, and clients rely on the agents' expertise and integrity to obtain a fair market price. However, due to conflicts of interest and information asymmetry, this can lead to inflated prices or delays in closing transactions.

With the advancement of digital technology and the Internet, numerous online real estate websites can now list properties for sale, but these platforms are generally passive, serving only as bulletin boards for property listings without providing active negotiation or transaction-completion tools. For example, platforms like Zillow, Realtor.com, or the 591 Housing Transaction website offer extensive property listings and some tools for estimating property values, but lack an integrated mechanism for direct negotiation and transaction processing between buyers and sellers. Users can view these listings and obtain basic market estimates, but must still undergo the traditional negotiation and closing process.

In summary, current online real estate platforms remain inadequate in several respects. Notable drawbacks include:
1. Lack of direct negotiation tools: Online real estate websites do not support real-time bidding or direct negotiation between buyers and sellers. This gap results in a lost opportunity for dynamic pricing and immediate interaction between parties.
2. Fragmented services: A user might find a property online but still needs to use separate tools or services for legal consultation, price negotiation, inspections, and so on.
3. Limited data utilization: Although abundant data is available (such as historical transaction prices and property comparisons), few systems effectively integrate this data to guide users in real-time decision-making.
4. Insufficient transparency and user control: Users typically cannot see the entire transaction process or influence it in a meaningful way. Reliance on agents or intermediaries persists, making the process opaque and sometimes unpredictable.

Given these limitations, there is a clear need for an improved real estate transaction system to address the aforementioned drawbacks.

### SUMMARY OF THE INVENTION

The present invention provides an innovative real estate transaction system aimed at fundamentally enhancing how buyers and sellers interact in real estate transactions. The real estate transaction system introduces a direct and interactive platform where key transactional activities-such as making offers, counteroffers, and completing transactions-can all be conducted online without reliance on the traditional multiple intermediaries. The core of the invention is a user-centric system that leverages technology to simplify the entire real estate transaction process, making it more efficient, transparent, and user-friendly.

This invention offers a comprehensive solution enabling a seller to list a property with all necessary details, including photographs, descriptions, and specific pricing parameters. The seller can set an initial asking price and define an acceptable negotiation range, giving them control over the negotiation process. Conversely, a buyer can view these listings through an intuitive user interface that not only displays detailed property information but also provides real-time market trends and data analysis to help them make informed decisions. The system facilitates direct negotiation by allowing the buyer to submit offers and engage in real-time counteroffers, thereby adding a dynamic element to the buying process.

A key feature of the real estate transaction system is its ability to conduct these negotiations entirely online, a significant departure from the traditional requirement for face-to-face interactions mediated by real estate agents. By promoting direct interaction between buyer and seller, the system ensures both parties can respond quickly to changing market conditions and adjust their strategies accordingly. This direct negotiation capability is provided by an instant communication module, which keeps both parties apprised of the latest offers and counteroffers at all times, maintaining a high level of transparency and engagement throughout the negotiation process.

Beyond its core transactional capabilities, the real estate transaction system includes several modules that further enhance user experience and transaction efficiency. A data analysis module accesses external databases (including government real estate transaction registries) to provide users with up-to-date market analysis and price trend information. This data analysis module helps users set reasonable prices and offers based on comprehensive market data. Additionally, a legal consultation module connects users with legal experts and resources to address any legal issues or concerns that arise during the transaction process (from initial listing to final sale). This ensures that users have all the information and support needed to complete transactions in compliance with relevant regulations.

The real estate transaction system also features modules for scheduling property inspections and other ancillary services (such as renovation, moving, and cleaning) that are important for preparing a property for sale or occupancy. These modules are tightly integrated with the main transaction platform, allowing users to manage virtually all aspects of a real estate transaction from a central interface. By offering these integrated services, the real estate transaction system not only simplifies the transaction process but also adds value for users by eliminating the need to coordinate multiple service providers.

In some embodiments, the real estate transaction system can further include various AI-driven modules to enhance functionality. For instance, an AI matching module can proactively identify properties that match a buyer's preferences, including listings sourced from third-party platforms, and actively notify relevant users when qualifying properties are found. A virtual agent interface is also provided, which uses a virtual persona or conversational interface to simulate the role of a real estate agent. This virtual agent can guide users through property search, negotiation, and the transaction process, thereby increasing user engagement and improving the user experience.

Furthermore, the real estate transaction system may include a remote property viewing module, enabling buyers to conduct property viewings through virtual tours or robotic devices. Buyers can choose to use smart lock systems or streaming technology to perform unattended or remote walkthroughs of properties. Additionally, the system can include a government integration module to assist users in completing and submitting various official documents (such as tax filings, property registration, or subsidy applications) automatically by connecting to government platforms or APIs.

In some embodiments, the system may further incorporate AI-driven user feedback mechanisms to evaluate user satisfaction and behavioral patterns, which can be used to optimize overall service quality. Additionally, features such as smart contract verification, personal data protection, and secure financial transaction management can be implemented to enhance the system's reliability and information security.

In certain embodiments, the real estate transaction system can be integrated with blockchain platforms. By recording property title information, transaction history, rental contracts, and other content on a blockchain, the system ensures data is tamper-proof and transparently traceable. Moreover, properties listed by sellers can be minted as uniquely coded NFTs (non-fungible tokens) via smart contracts, representing digital ownership of the property. Upon a buyer fulfilling the agreed transaction conditions, the system can automatically trigger the transfer of the NFT and the corresponding payment, thereby realizing a truly digital real estate transaction.

In summary, the disclosed system and its AI modules provide a smooth, interactive, and intelligent real estate transaction experience, thereby reducing reliance on traditional intermediaries while enhancing the transparency, convenience, and personalization of the overall process. Overall, the invention represents a significant advancement in the field of real estate transactions. It provides a platform that not only supports direct and efficient negotiations, but also offers an integrated solution for managing the entire transaction lifecycle. By reducing the need for intermediaries and empowering users with greater control over the process, the real estate transaction system significantly lowers transaction costs and improves the overall experience for both buyers and sellers. This approach aligns with modern technological trends and user expectations, setting a new standard for real estate transactions in the digital age.

### BRIEF DESCRIPTION OF THE DRAWINGS

FIG. 1 illustrates, in block diagram form, one embodiment of the real estate transaction system of the present invention.
FIG. 2 illustrates, in block diagram form, one embodiment of the transaction module.

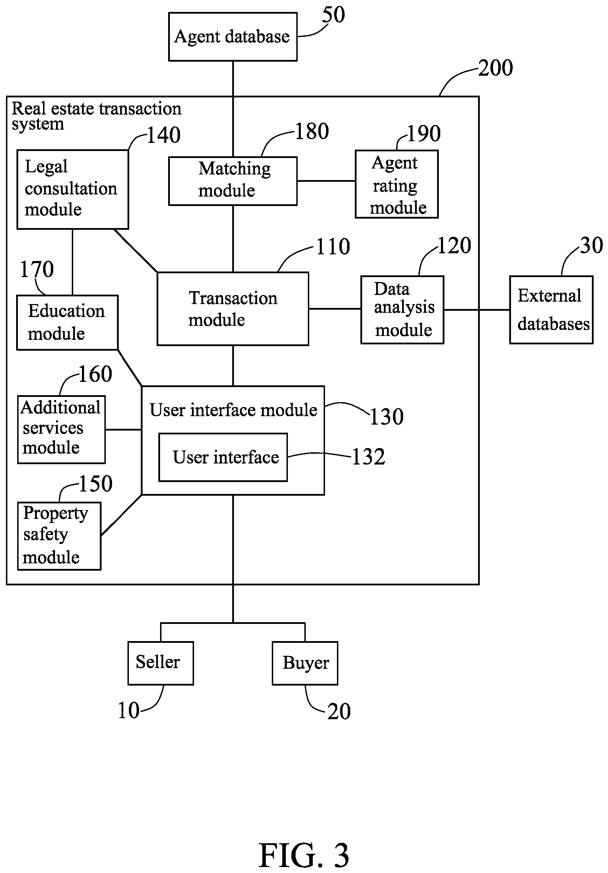

FIG. 3 illustrates, in block diagram form, another embodiment of the real estate transaction system of the present invention.
FIG. 4A and FIG. 4B are operational flow diagrams of the real estate transaction system for the seller and the buyer, respectively.
FIG. 5 illustrates, in block diagram form, yet another embodiment of the real estate transaction system of the present invention.
FIG. 6 illustrates an operational flow related to the bank service module.
FIG. 7 illustrates, in block diagram form, a fourth embodiment of the real estate transaction system of the present invention.
FIG. 8 illustrates a module structure diagram of a real estate transaction system according to another embodiment of the present invention, incorporating blockchain and NFT technology.
FIG. 9 illustrates a real estate transaction flowchart in a second embodiment of the present invention, incorporating NFT and smart contract technology.
FIG. 10 illustrates a real estate transaction system according to yet another embodiment of the present invention, including virtual real estate listing functionality.
FIG. 11 is a flowchart illustrating the process of real-time price negotiation and transaction of virtual real estate.
FIG. 12 is a flowchart illustrating the application of the present invention to time-locked NFT leasing.

### DESCRIPTION OF THE PREFERRED EMBODIMENTS

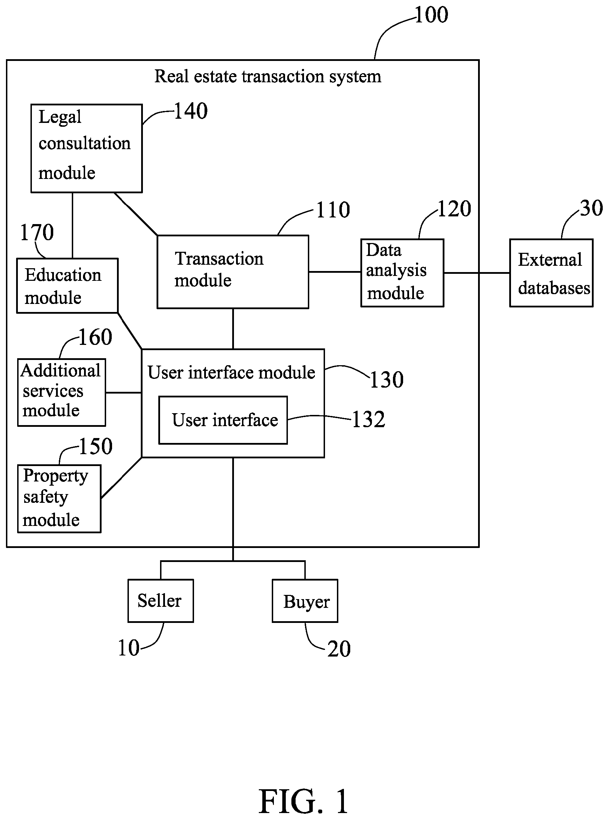

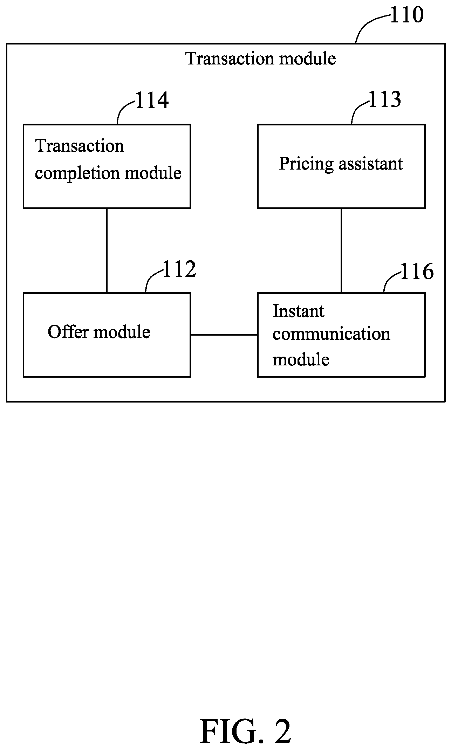

Referring to FIG. 1, which is a block diagram of one embodiment of a real estate transaction system 100 of the present invention, the purpose of this system is to simplify and enhance the real estate transaction process. The real estate transaction system 100 includes multiple modules, each designed to address a specific aspect of the transaction process. In this embodiment, these modules are software components, suitable for storage in memory (e.g., an SSD) and execution by a processing unit (e.g., a CPU). The system 100 comprises a transaction module 110, which allows a seller 10 to list a property with a detailed description, images, and pricing information. The transaction module 110 permits the seller 10 to set an initial asking price as well as a range within which they are willing to negotiate. Additionally, a buyer 20 can use the transaction module 110 to search for properties, view detailed listings, and submit offers based on their evaluation of the properties and market conditions. Furthermore, the transaction module 110 supports dynamic online negotiation, enabling the buyer and seller to quickly present and respond to offers in real time. This direct negotiation process is supported by an instant communication module 116 (as shown in FIG. 2), which ensures both parties are kept up-to-date with the latest offers and counteroffers, thereby maintaining transparency and momentum throughout the negotiation.

It should be noted that in the following embodiments, the term "property" is exemplified mainly by completed houses. However, those skilled in the art will understand that "property" as referred to in the present invention is not limited to completed houses, but also includes pre-sale properties, land, and other types of real estate. Likewise, the "real estate transactions" discussed in this invention are not limited to sales of completed homes, but also encompass transactions such as pre-sale home sales, land sales, and even real estate rentals (e.g., leases).

Apart from the transaction module 110, the real estate transaction system 100 further includes a data analysis module 120, which plays a critical role in informing users of current market trends and property values. The data analysis module 120 can connect to and access one or more external databases 30, including government real estate price registries, to extract and analyze historical and current market data. Insights generated by the data analysis module 120 help users (including the buyer 20 and the seller 10) set prices that are competitive and reflective of prevailing conditions, and make informed bidding decisions based on the latest market trends.

In this embodiment, a user interface module 130 is another key component of system 100, providing a user interface 132 that allows users to interact with the various modules of the system 100. The user interface 132 enables users to easily navigate different stages of the transaction process, from listing and searching for properties to negotiating and completing transactions. The user interface 132 displays property information in a clear format and, by connecting to other modules, provides convenient additional functions such as legal consultation, property inspection scheduling, and other related services. It is understood that the buyer 20 and seller 10 connect to the user interface module 130 via their electronic devices (for example, smartphones, laptops, or desktop computers), and the user interface 132 is displayed on the screens of those devices.

More specifically, to support users in ensuring their transactions comply with legal requirements and to help them understand the legal implications of real estate transactions, the real estate transaction system 100 includes a legal consultation module 140. The legal consultation module 140 provides an online connection to legal professionals who can offer resources and guidance on transaction-related legal matters, allowing users to obtain advice and consultation as needed during the transaction. In this embodiment, the real estate transaction system 100 also includes a property safety module 150. The property safety module 150 provides network connectivity to companies responsible for property inspections and safety. Through the property safety module 150, users can schedule inspections of the property for structural integrity, environmental hazards, and other key evaluations. After these inspections, detailed reports can be downloaded from the property safety module 150 and shared between the buyer and seller, ensuring transparency and trust regarding the condition of the property. Furthermore, the real estate transaction system 100 includes an additional services module 160 that enables users to select a range of extra services, such as renovation, moving, cleaning, and appliance setup, which are important for preparing a property for sale or for move-in. Additionally, the real estate transaction system 100 includes an education module 170, which provides users with extensive information on real estate transactions, property management, and market trends.

The above is a broad introduction to the real estate transaction system 100 of this embodiment. The following will describe each module and various embodiments in greater detail.

Referring to FIG. 2, which is a block diagram of one embodiment of the transaction module, the transaction module 110 enables the buyer 20 and the seller 10 to directly and efficiently engage in the processes of property listing, bidding, negotiation, and final completion of a real estate transaction. For the seller 10, the transaction module 110 includes an offer module 112 that provides an interface for listing their property. After logging into the real estate transaction system 100, the seller 10 first inputs detailed information about the property, including descriptions, pictures, videos, and any other relevant details that help the buyer 20 make informed decisions. Once the property details have been entered, the seller 10 sets the initial asking price for the property. Importantly, the transaction module 110 also allows the seller to define an acceptable price range or negotiation space-i.e., the range within which the seller is willing to negotiate with potential buyers. This feature gives the seller 10 flexibility and control during the negotiation process, enabling them to respond to market conditions and buyer interest without constantly readjusting the price.

Additionally, the transaction module 110 provides a pricing assistant 113, which is connected to the data analysis module 120. The pricing assistant 113 offers the seller 10 real-time market data and price trends to help them set a price that is competitive and aligned with current market conditions. The pricing assistant 113 combines historical transaction data with current market analysis to suggest an optimal listing price and a potential negotiation range. The buyer 20 uses the transaction module 110 to search for and view listings of multiple properties. The transaction module 110 provides various search filters, including location, price range, property type, and other criteria, to help the buyer 20 find properties that meet their needs. Each listing presented to the buyer 20 includes detailed information uploaded by the seller 10, along with additional data provided by the data analysis module 120, such as neighborhood statistics, school ratings, and other local information.

When the buyer 20 is interested in a particular property, they can directly initiate the negotiation process through the offer module 112 of the transaction module 110. The offer module 112 allows the buyer 20 to submit an initial offer on the property of interest. This offer is immediately conveyed to the seller 10 via the instant communication module 116, and the seller 10 can respond directly through the instant communication module 116. The transaction module 110 supports a real-time bidding process, whereby the seller 10 and buyer 20 can quickly exchange offers and counteroffers. The process is designed to be transparent for both parties; both can see the history of offers and counteroffers, which makes it easier to understand each other's positions and adjust their own offers accordingly.

In this embodiment, the negotiation process within the transaction module 110 is supported by the instant communication module 116. When a new offer or counteroffer is made, the buyer 20 and the seller 10 both receive immediate notifications, ensuring they can respond in a timely manner and maintain the momentum of the negotiation. This feature is very important for keeping the negotiation smooth and dynamic, which is often necessary to effectively close deals in a competitive market.

Once both parties agree on a price, the transaction module 110's transaction completion module 114 facilitates finalizing the sale. This includes generating and exchanging preliminary contracts, which can be electronically signed via the transaction completion module 114. The transaction completion module 114 ensures that all necessary legal procedures and forms are completed in compliance with local real estate laws. This streamlined approach not only significantly accelerates the transaction process but also reduces errors and misunderstandings that can occur with manual paperwork. Additionally, the transaction module 110 is integrated with the legal consultation module 140 to provide legal advice at any point during the process. This integration ensures that any legal issues or concerns are addressed promptly, further facilitating a smooth and compliant transaction process.

Referring again to FIG. 1, the data analysis module 120 in the real estate transaction system 100 leverages a wide range of data sources-including historical sales data, current market trends, and predictive analytics-to provide users with actionable insights and detailed market analysis. By integrating this data-driven approach into the transaction process, the data analysis module 120 plays a crucial role in ensuring that pricing strategies and offer decisions are based on solid empirical data.

The primary functions of the data analysis module 120 are to collect, analyze, and present data such that users of the real estate transaction system 100 can easily access these data and benefit from them. The module 120 retrieves data from various sources, including government real estate databases, private market research firms, and public records, compiling a comprehensive view of the real estate market at both macro and micro levels. This extensive data includes, but is not limited to, transaction prices, property valuations, neighborhood demographics, and economic indicators.

**In** one embodiment, the data analysis module 120 can provide up-to-date market trend information, such as average prices, sales volumes, and price change trends. This information is highly valuable for sellers 10 when setting initial asking prices and for buyers 20 when making offers on properties. Market trend analysis helps sellers 10 understand market dynamics and adjust their expectations and strategies accordingly. Additionally, the data analysis module 120 provides pricing suggestions and optimization. For the seller 10, the data analysis module 120 offers advanced pricing algorithms that recommend appropriate listing prices based on the property's features, its location, and current market conditions. These recommendations are generated using machine learning models that analyze the sales of similar properties and prevailing market trends, predicting the best starting price to maximize attractiveness and value. For the buyer 20, the data analysis module 120 offers a similar functionality by suggesting competitive offer amounts based on recent sales of comparable properties and listing analyses. This helps the buyer 20 to put forward offers that are both competitive and fair, increasing the probability of a successful negotiation.

In one embodiment, the data analysis module 120 also enables a detailed comparative market analysis feature, allowing users to compare a target property with similar properties in the area. These comparisons cover various attributes, including the properties' size, condition, age, and features, as well as their sale prices, time on market, and historical price adjustments. This market analysis function is extremely valuable to both buyers and sellers because it provides a clearer picture of where the property stands in the local market. Additionally, the data analysis module 120 is capable of forecasting future market trends based on historical data and current patterns. This feature helps users anticipate changes in market conditions, such as price increases or decreases, shifts in buyer activity, or extended selling cycles. For the seller 10, this might mean adjusting the price or negotiation range to align with expected future market conditions. For the buyer 20, it could mean submitting offers promptly, before the market moves out of their favor.

As mentioned above, the data analysis module 120 works closely with the transaction module 110 to enhance their functionalities. For example, when the seller 10 lists a property, the data analysis module 120 will automatically provide a suggested price range, which the seller 10 can adjust based on their own insights and the module's suggestions. During the offer process, the data analysis module 120 continuously updates the latest data available to the buyer 20 and seller 10, ensuring that each party makes decisions based on the most current market insights.

Referring again to FIG. 1, the legal consultation module 140 is intended to provide users with convenient and direct legal support and resources during the process of buying or selling real estate. The legal consultation module 140 ensures that buyers and sellers can cope with the often complex legal environment of real estate transactions. By integrating legal consultation directly into the transaction process, the legal consultation module 140 helps prevent common legal pitfalls and enhances the overall security and compliance of the transaction.

The legal consultation module 140 provides an online connection to legal professionals who can offer resources and advice. These legal professionals might be, for example, attorneys in government legal aid departments or real estate lawyers in law firms. Users can initiate a consultation through the legal consultation module 140, scheduling meetings or sending inquiries directly from the user interface 132. This functionality is particularly valuable for resolving specific issues that may arise regarding contracts, negotiations, property rights, or unique circumstances in the transaction process. Additionally, for more general legal questions, the legal consultation module 140 offers automated guidance based on common questions and typical legal scenarios in real estate transactions; this may utilize large language model (AI) technology to provide such guidance. The guidance can include explanations of key legal terms, summaries of relevant laws and regulations, and step-by-step guides to typical legal procedures in real estate transactions.

One important function of the legal consultation module 140 is to assist users in reviewing and understanding legal documents related to their real estate transaction, including purchase agreements, disclosure forms, and other required documents. The legal consultation module 140 allows users to upload documents and receive annotations or explanatory notes from legal professionals, helping them interpret the content and significance of these documents. In addition to reviewing existing legal documents, the legal consultation module 140 provides templates and tools for creating the legal documents needed for the transaction, including generating draft contracts, amendments, and other legal forms tailored to the specific details of the user's transaction and local legal requirements.

Furthermore, the legal consultation module 140 is closely integrated with the other main modules of the real estate transaction system 100 to ensure all legal aspects of each transaction are addressed. For example, as the user navigates through making offers and finalizing the sale via the transaction module 110, the legal consultation module 140 performs real-time legal checks to ensure that all offers, counteroffers, and agreements meet legal standards. This integration helps prevent legal oversights and ensures all parties are fully aware of their rights and obligations. Additionally, during the negotiation phase facilitated by the offer module 112, the legal consultation module 140 provides guidance on legal negotiation strategies, including advising on legal considerations when making or accepting offers, to ensure that any conditions or contingencies in an offer are legally enforceable.

The legal consultation module 140 can also connect with the education module 170 to educate users on real estate-related laws, equipping them with the knowledge needed to make informed decisions. The education module 170 provides a range of legal educational materials, including articles, videos, and online workshops covering various aspects of real estate law. These resources are designed to help users understand the broader legal context of their transactions and prepare for successful, compliant transactions. Additionally, users receive regular updates and notifications about changes in real estate law, including new regulations, legal precedents, and other developments that could affect their transactions. This feature ensures that users stay informed about the latest legal environment and can adjust their strategies accordingly.

Referring again to FIG. 1, the property safety module 150 is designed to ensure that the buyer 20 and the seller 10 are aware of and can address any potential safety issues related to the property before the transaction is completed. The property safety module 150 facilitates the scheduling and management of various property inspections and safety checks, providing reassurance to users and ensuring the property meets all necessary safety standards. In this embodiment, users can easily schedule inspections through the property safety module 150. The module 150 provides a list of certified inspectors to choose from, who specialize in different types of property evaluations (including structural integrity, environmental hazards, and general condition inspections). The property safety module 150 organizes and displays available inspection times and dates, allowing users to book an inspection that fits their schedule. After an inspection is completed, the property safety module 150 provides a detailed report that lists any issues discovered and suggests potential solutions or actions. These reports are significant for the buyer 20, who needs to understand the property's condition, and for the seller 10, who might need to make repairs or adjustments based on the inspection results. Additionally, the property safety module 150 offers an interactive platform where users can view feedback from the inspector and ask follow-up questions. If issues are found that require professional remediation, the module can also suggest local contractors or repair services to address those issues.

Referring again to FIG. 1, the education module 170's purpose is to empower users with knowledge related to real estate, helping them make more informed decisions during the buying and selling process. The education module 170 includes various learning materials such as articles, videos, tutorials, and infographics, covering a broad range of topics from basic real estate principles to more advanced investment strategies and market analysis. Moreover, the education module 170 provides information about interactive seminars and workshops related to real estate; if such seminars and workshops are held online, the module provides relevant hyperlinks. Additionally, based on the user's personal profile and their prior interactions with the education module 170, the module recommends a personalized learning path, guiding the user through a series of topics and resources that align with their interests and needs. This personalized approach helps users focus on the most relevant and useful information.

The additional services module 160 extends the functionality of the real estate transaction system 100 by providing a range of services that a user might need before, during, or after the sale of a property. The additional services module 160 streamlines the process of finding and scheduling these services, offering a one-stop solution for the user's supplementary needs. The additional services module 160 allows users to connect with service providers offering remodeling or interior design services. Whether the seller 10 wishes to enhance the property's appeal before listing, or the buyer 20 plans to customize their new home, this service makes it easy to find reliable professionals. Additionally, the additional services module 160 provides connections to moving companies and storage companies, allowing users to obtain quotes, schedule moving services, and manage the logistics of a move. This feature is particularly useful for buyers 20 who need a smooth transition into a new home and for sellers 10 who need to clear out a property after the sale. Furthermore, users can book cleaning and maintenance services through the additional services module 160, ensuring that the property is in optimal condition for showings and inspections. This benefits sellers 10 in preparing their property for listing, and buyers 20 who want to ensure their new property is clean and move-in ready.

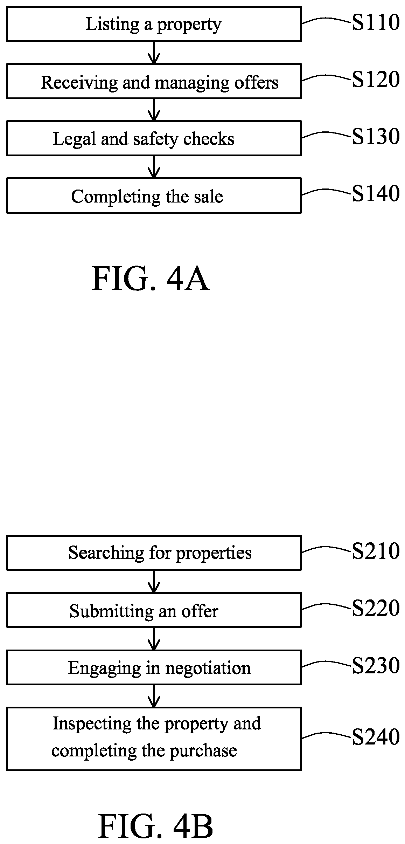

Referring now to FIGS. 4A and 4B, which illustrate the operational processes of the real estate transaction system for the seller and buyer respectively, it can be seen how the process integrates the various modules of system 100 to ensure all steps flow together, providing a smooth experience for the users throughout.

First, referring to FIG. 4A in conjunction with FIG. 1, the seller 10's operational flow may include the following steps:
Listing a property (Step S110): The seller uses the transaction module 110 to list their property. They input detailed information about the property, including photos, descriptions, and any unique features that might attract potential buyers. During this process, the data analysis module 120 provides real-time market data and pricing suggestions to help the seller 10 set an initial asking price that is competitive and reflective of current conditions.

Receiving and managing offers (Step S120): Once the property is listed, it is presented to potential buyers via the user interface module 130, which displays the property in a structured and appealing format. As buyers 20 place offers, the seller 10 receives real-time notifications through the user interface module 130. The offer module 112 allows the seller 10 to review these offers and negotiate directly with the buyer 20. The seller 10 can make counteroffers and communicate with the buyer 20 to reach a price acceptable to both parties.

Legal and safety checks (Step S130): Meanwhile, the legal consultation module 140 can help the seller 10 review any legal documents and answer legal questions related to the sale. If the property requires safety inspections, the seller 10 can use the property safety module 150 to schedule and review these inspections, ensuring all necessary reports are completed and provided to the prospective buyer 20.

Completing the sale (Step S140): Once a price agreement is reached, the transaction module 110 guides the seller 10 through the final steps, including generating a preliminary contract. The seller 10 and buyer 20 can review and sign this contract electronically via the user interface module 130. The legal consultation module 140 ensures all contract terms meet legal standards and that both parties fully understand their obligations and rights.

Next, referring to FIG. 4B in conjunction with FIG. 1, the buyer 20's operational flow can include the following steps:
Searching for properties (Step S210): The buyer begins by using the user interface module 130 to search for properties that meet their criteria. The user interface module 130 allows the buyer 20 to filter properties based on location, price, size, and other preferences. The data analysis module 120 enhances this search by providing additional market insights and comparative analysis, helping the buyer 20 make informed decisions.

Submitting an offer (Step S220): When the buyer 20 is interested in a property, they use the offer module 112 to submit an initial offer directly to the seller 10. The offer module 112 supports the negotiation process, allowing the buyer 20 to adjust their offer based on the seller 10's counteroffers. During this process, based on current market conditions, the data analysis module 120 can provide guidance on competitive offer strategies.

Engaging in negotiation (Step S230): The negotiation process is supported by the offer module 112, with the buyer 20 and seller 10 exchanging offers and counteroffers in real time. The user interface module 130 keeps both parties informed of the status of their negotiations through updates and notifications. The buyer 20 can use the legal consultation module 140 to address legal questions and review the legal implications of their offers and any terms or conditions.

Inspecting the property and completing the purchase (Step S240): The buyer 20 can use the property safety module 150 to request property inspections, thereby assisting in scheduling and managing these inspections. Once the buyer 20 is satisfied with the property's condition and a final price is agreed upon, the buyer 20 completes the purchase through the transaction module 110, which involves reviewing and signing the final contract. The legal consultation module 140 provides support during this stage to ensure all legal aspects are appropriately handled.

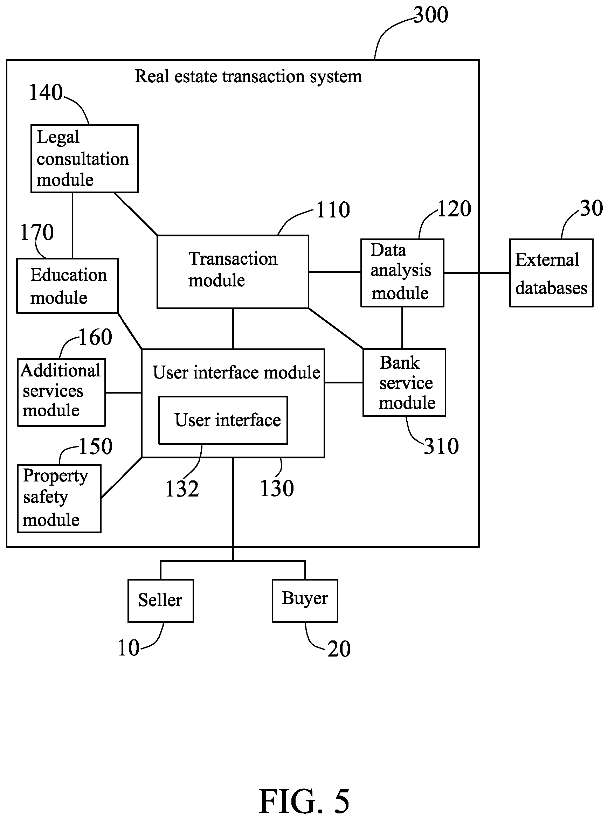

From the above, it can be seen that through the real estate transaction system 100 of this embodiment, the buyer 20 and seller 10 can complete a real estate transaction directly, thereby saving the substantial brokerage fees that would otherwise be incurred. However, for some buyers and sellers, they might still prefer to have a real estate agent involved to assist with certain tasks, such as conducting property showings, handling property keys, or helping with negotiations. To address this, the present invention provides another embodiment of a real estate transaction system. Referring to FIG. 5, a real estate transaction system 200 is illustrated. In comparison to the real estate transaction system 100, the system 200 adds a matching module 180 and an agent rating module 190. The matching module 180 increases service efficiency and personalization by connecting buyers and sellers with the most suitable real estate agents.

In the real estate transaction system 200, the matching module 180 utilizes an appropriate algorithm, taking multiple factors into consideration, to ensure optimal matching between users and real estate agents. The matching module 180 analyzes the user's preferences as well as the skills and historical performance of real estate agents. When a seller 10 lists a property or a buyer 20 expresses interest in a certain type of property or a specific location, the matching module 180 begins by collecting the user's preferences (such as the desired property type, preferred location, price range, and special requirements like proximity to schools or public transport).

At the same time, the matching module 180 connects to an agent database 50 containing detailed information about real estate agents, including each agent's specialties, the geographic areas they serve, client feedback ratings, and historical transaction data. Real estate agents' performance ratings are dynamically updated based on past client feedback continually gathered by the agent rating module 190, ensuring that the ratings reflect the latest interactions and customer evaluations. In this embodiment, the matching module 180 considers factors such as:
Geographic expertise: Agents are evaluated based on their familiarity with, and success in, the area where the property is located, ensuring that local market knowledge is a key factor in the matching process.

Performance rating: Agents with high ratings from past transactions and client feedback are given priority during the matching process. This approach incentivizes real estate agents to maintain high levels of professionalism and service quality.

User preference matching: The algorithm assesses how well an agent's experience and expertise align with the specific preferences and needs of the buyer or seller (including property type, budget considerations, and other personalized criteria).

Once the matching module 180 identifies the best candidates, it presents these agent profiles to the user (seller 10 or buyer 20) via the user interface module 130. These profiles include the agent's photograph, a brief introduction, area of expertise, and a summary of user ratings and review comments. The user can view these recommendations and directly select a real estate agent to contact through the interface, simplifying the process of engaging an agent to assist in the transaction. The matching module 180 is tightly integrated with the user interface module 130 to provide intuitive and easy-to-navigate options for viewing and choosing agents. This design ensures that even first-time users of an online real estate transaction platform can effectively utilize the system, thereby improving user satisfaction and engagement.

In addition, the agent rating module 190 serves to ensure that the quality of service provided by real estate agents remains high and consistent. The agent rating module 190 systematically collects, analyzes, and utilizes user feedback to evaluate real estate agent performance. After a transaction is completed-or at important milestones during an ongoing transaction-the agent rating module 190 prompts the buyer 20 and seller 10 to provide feedback on their experience with the real estate agent. This feedback covers various criteria, such as the agent's communication skills, professionalism, knowledge of the market, negotiation skills, and overall satisfaction with the services provided. Users can rate the agent on these aspects using a predefined scale and can also add comments to give more detailed insight into their experience.

The agent rating module 190 processes this feedback to update the agent's performance rating. It employs a weighted averaging mechanism where more recent feedback has a greater influence on the overall rating, ensuring that the performance rating accurately reflects the agent's current level of service. This dynamic updating process can capture changes in an agent's behavior and performance over time, motivating agents to maintain high standards of service. **In** addition to numeric ratings, the agent rating module 190 can use natural language processing techniques to analyze textual feedback, identifying key themes and sentiment in the user comments. This analysis helps highlight areas where an agent performs well or may need improvement. For example, if multiple clients mention that a particular agent excels at explaining complex legal terms, this strength is recorded and can be used to match that agent with clients who value clear legal communication.

Performance evaluations generated by the agent rating module 190 are used not only to update the agent's profile data but also to inform the matching module 180. Agents with higher ratings are given priority in the matching process, and specific positive feedback can be used to better match agents with users who have particular needs or preferences. For instance, an agent known for patience and thoroughness might be paired with a first-time homebuyer who requires extra guidance. Furthermore, in one embodiment, the real estate transaction system 200 allows agents to view their own ratings and anonymized feedback through the user interface module 130. This feedback loop encourages agents to improve their services, since they understand that user feedback has a direct impact on their future business prospects. Through the agent rating module 190, the real estate transaction system not only enhances individual user experiences but also promotes a culture of continuous improvement among real estate professionals, thereby increasing overall satisfaction and trust in the transaction process.

In other embodiments, the real estate transaction system 200 may further include a vendor selection mechanism integrated into the additional services module 160 or the agent rating module 190, which is configured to provide a more engaging way for users to select service providers. Specifically, after a user posts a request for a particular service (for example, renovation, moving, cleaning, home inspection, or legal consultation), the system can introduce one or both of two selection modes: a "bidding" mode and a "voting" mode.

In the bidding mode, when a user submits a service request on the platform, cooperating vendors that meet the criteria for that service can submit bids through the real estate transaction system 200, providing quotes, available service times, past project examples, and other relevant information. The system 200 compiles the bid information and presents a concise comparison interface, allowing the user to choose the vendor that best fits their budget and requirements. This mechanism encourages competitive bidding in the marketplace and can improve service quality.

In the voting mode, when the platform needs to introduce a new service provider or replace a poorly rated partner vendor, the real estate transaction system 200 can open up a public voting process among existing users. This vote can consider factors such as historical service evaluations, regional performance records, and compliance history. Higher voting weight can be given to users with high reputation (for instance, highly rated users or recent active clients). The system 200 can incorporate the vote totals and weighted ratings into a ranking of the service providers, which can then be used as a basis for platform selection or recommendations.

Additionally, platform administrators can use this mechanism to establish more flexible partnership models, such as holding periodic bidding or selection events for certain regions or categories of services. This increases the diversity of services and encourages high-quality vendors to participate in the platform ecosystem. By introducing bidding and voting mechanisms, the real estate transaction system not only provides users with more decision-making power and a sense of participation, but also enhances service quality competition and transparency. This aligns with modern platform business model expectations regarding supplier selection and user co-governance.

Referring to FIG. 5, which shows another embodiment of the present invention in block diagram form (real estate transaction system 300), the system 300 includes an additional bank service module 310, whose primary purpose is to integrate financial services directly into the property transaction process. The bank service module 310 enhances the functionality of the real estate transaction system 300 by facilitating key banking services, including property appraisal and secure online payment processing.

The bank service module 310 enables the seller 10 to directly apply for a bank appraisal service through the real estate transaction system 300. This feature allows the seller to receive an accurate assessment of the property's value, which is very important for setting a competitive listing price. Similarly, the buyer 20 can use the bank service module 310 to request an appraisal in order to determine an appropriate loan amount; this is significant for a buyer 20 who needs to align their offer with their financing capability. The bank service module 310 interfaces with multiple banking institutions, simplifying the appraisal process and ensuring that users can obtain timely and accurate property valuations.

Furthermore, the bank service module 310 facilitates secure online financial transactions, including handling the property deposit and final closing payments. This feature enables both parties to complete transaction-related financial transfers within the real estate transaction system 300, reducing the need for external payment processing services. The buyer 20 can, through a secure gateway provided by the bank service module 310, pay the earnest money or deposit online, ensuring that funds are transferred securely and that both parties have a transaction record. Upon completion of the transaction, the bank service module 310 supports full settlement of the agreed price, handling all necessary fund transfers between the buyer's and seller's accounts.

In this embodiment, the bank service module 310 is closely integrated with the transaction module 110 to leverage appraisal information in adjusting property prices and offers. For example, if the seller 10's property appraises for less than expected, the seller 10 can accordingly adjust the listing price within the transaction module 110. Additionally, the data analysis module 120 collaborates with the bank service module 310 by incorporating appraisal data into its market trend analysis. This helps ensure that price recommendations provided to users reflect not only historical and current sales data, but also the appraisal results of the specific property. When a seller 10 lists a property, they can opt to request a bank appraisal directly through the user interface 132 connected to the bank service module 310. Once the request is processed, the bank service module 310 coordinates with the selected bank to conduct the appraisal. The result is then fed back into the transaction module 110, and the seller 10 can adjust the property's price based on the appraised value, thus improving the accuracy and appeal of the listing.

Additionally, an interested buyer 20 can use the bank service module 310 to request a preliminary loan assessment. This helps the buyer understand their financing capacity before submitting an offer. The process begins with the buyer 20 submitting a request through the user interface 132, and the bank service module 310 forwarding that request to a connected banking institution. The loan qualification information received (e.g., an approved loan amount) assists the buyer 20 in making an offer that is competitive yet within their financial means, ensuring the offer is realistic relative to their financing ability.

During the negotiation stage, once a price is agreed upon, the bank service module 310 can process the initial deposit online. This immediate transaction secures the property and confirms the buyer's commitment. As negotiations conclude and the final price is set, the bank service module 310 facilitates the transfer of the remaining funds, ensuring a smooth handover of money-essentially functioning as an escrow. The bank service module 310 provides real-time transaction status updates to both parties via the user interface module 130, keeping all participants informed and engaged.

Furthermore, in this embodiment, the instant communication module 116 works in tandem with the bank service module 310 to notify both buyer and seller about the status of banking transactions, including appraisal requests and payment processing. This ensures that all parties are aware of critical financial events, enhancing the system's transparency and trustworthiness. The bank service module 310 also supports compliance checks and legal requirements associated with real estate financial transactions, such as verifying that all payments comply with local banking regulations. In this embodiment, the legal consultation module 140 assists by reviewing the transaction records from the bank service module 310 to provide legal advice regarding payment terms and conditions.

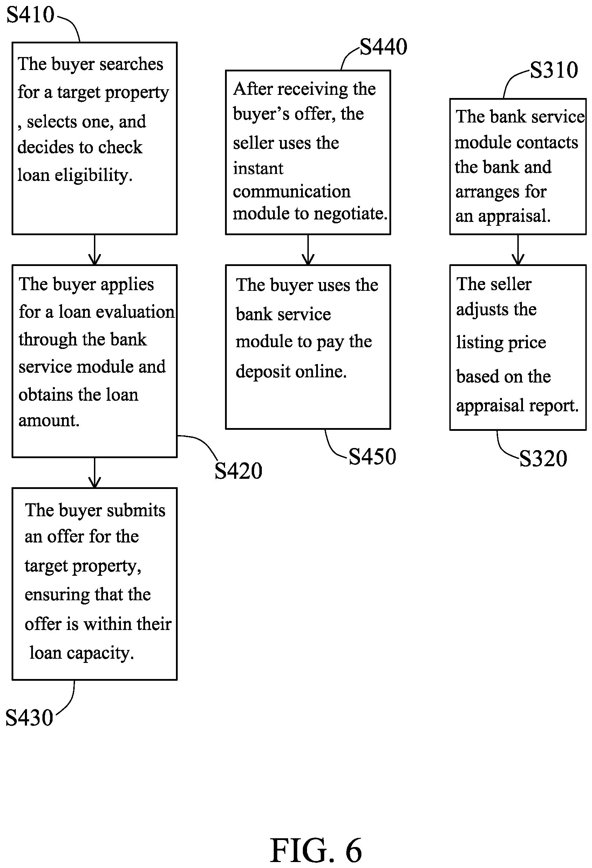

Referring to FIG. 6, which illustrates the operational flow related to the bank service module, we first consider the seller-related process. In Step S310, the seller 10 decides to list a property and requests an appraisal through the real estate transaction system 300. At this point, the bank service module 310 initiates the process by contacting a bank and arranging the appraisal. Next, in Step S320, after receiving the appraisal report, the seller 10 adjusts the listing price based on that appraisal. The adjusted price is displayed to potential buyers via the user interface 132.

Now, the buyer-related process: In Step S410, the buyer 20 searches for properties within their area of interest and selects one. After seeing the listing price, the buyer 20 decides to check their loan eligibility. Then, in Step S420, through the bank service module 310, the buyer 20 applies for a loan evaluation. The bank service module 310 returns information on the loan amount the buyer can obtain, which influences their offer. Then, in Step S430, the buyer 20 submits an offer on the property, and the transaction module 110 along with the bank service module 310 ensures that the offer is within the buyer's loan capacity. Next, the buyer 20 uses the bank service module 310 to pay the deposit online, enabling immediate processing of the deposit and securing the property. Then, in Step S440, the seller 10 receives the offer and, using the instant communication module 116, engages in negotiations; the two parties agree on a final price. Thereafter, as shown in Step S450, the buyer and seller handle the final settlement through the bank service module 310, completing the sale. The legal documents can be reviewed and digitally signed with the help of the legal consultation module 140.

By integrating all of the above features, the real estate transaction system 300 not only simplifies the purchase and sale process but also ensures that all financial transactions are integrated, secure, and compliant with legal standards. From the foregoing embodiment, it is evident that the bank service module 310 significantly enhances user confidence and efficiency in real estate transactions.

In some embodiments, the real estate transaction system further includes multiple artificial intelligence modules (hereafter referred to as AI modules) that enhance the automation, personalization, and proactive service capabilities of the overall transaction process. These AI modules can operate in conjunction with the modules described above, aiming to reduce manual intervention, streamline operations, and improve the efficiency and accuracy of decision-making for both buyers and sellers.

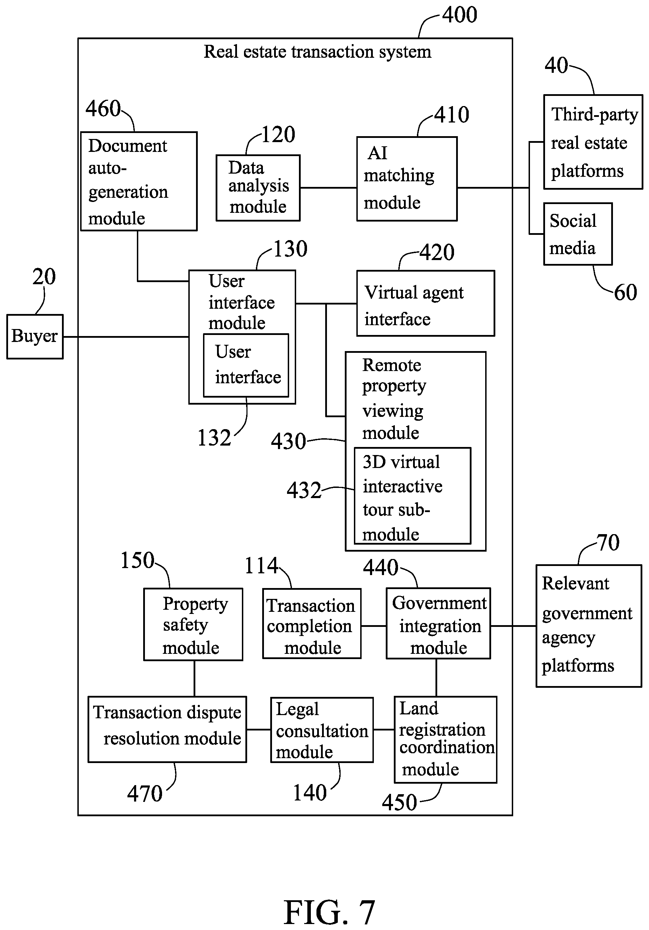

Referring to FIG. 7, which illustrates a block diagram of a fourth embodiment of the real estate transaction system (designated as system 400), this embodiment builds various types of modules on the foundation of the system 100 described in FIG. 1. In the description below, modules already introduced in FIG. 1 will be labeled with the same reference numbers and not described again in detail. Note that for clarity in FIG. 7, not all components of the real estate transaction system 100 are shown.

The real estate transaction system 400 may include an AI matching module 410, which is operatively connected to the data analysis module 120 and configured to store and analyze buyer preferences, then proactively search for and identify real estate properties that meet those preferences. In this embodiment, the buyer 20 can preset their criteria for a desired property, such as budget range, location, size (floor area), building type (e.g., apartment or single-family home), age of the property, and perhaps proximity to certain amenities (like specific school districts or transportation hubs). This information is stored in the buyer 20's personal profile and continuously monitored by the AI matching module 410.

The AI matching module 410 can further search for property data outside of the real estate transaction system 400. Methods for this can include, but are not limited to, web crawling, API integration, or social media data scraping. Through these methods, the AI matching module 410 obtains property listings from third-party real estate platforms 40 (such as an MLS, Zillow, or local listing sites), real estate forums, or properties that agents advertise on social media 60. Properties that match or closely approximate the buyer's set criteria are automatically flagged, filtered, or recommended to the buyer 20. Additionally, when a new property is listed (whether on the real estate transaction system 400 itself or from an external source), the AI matching module 410 will automatically notify buyers whose saved preferences match or are similar to that property. This feature turns the real estate transaction system 400 from a passive search model into an active notification model, further boosting transaction efficiency.

To further enhance the interactive experience, the real estate transaction system 400 may include a virtual agent interface 420, which is operatively connected to the user interface module 130 and configured to simulate the role of a real estate agent. The virtual agent interface 420 can appear as a voice assistant, animated avatar, chatbot, or other digital persona, and it is capable of interacting with users in natural language. For example, the virtual agent interface 420 can provide functions such as guiding buyers and sellers through the usage of the system, explaining the operations or transaction steps at each stage, answering common questions, helping to interpret reports or pricing analyses generated by the system, and coordinating matters like scheduling property viewings or document submissions.

In some embodiments, the virtual agent interface 420 can assist both parties during the negotiation process. For instance, it may prompt both buyer and seller at appropriate times, guide the pacing of the negotiation, and otherwise facilitate the process without directly intervening with specific price suggestions. This increases user engagement and interactivity, and is especially useful for users who are not familiar with the real estate transaction process. Moreover, the virtual agent interface 420 can be configured to collect and analyze user feedback, evaluate the satisfaction of interactions, and adjust its conversational style based on user behavior, thereby improving the overall user experience.

The real estate transaction system 400 can also include a remote property viewing module 430, which is operatively connected to the user interface module 130 and configured to allow the buyer 20 to carry out property viewings without physically being on-site. The remote property viewing module 430 can combine any of the following implementations:
- A seller or agent conducting a live guided tour via a mobile device;
- Use of a robotic device with remote control capabilities to provide a video walkthrough;
- Utilization of 3D scanning technology to create a virtual tour of the property;
- Integration with a smart lock system, enabling the buyer to enter the property with a temporary authorization code for unaccompanied viewing.

When the buyer is unable to visit in person, the remote property viewing module 430 can be combined with the virtual agent interface 420 or a live agent to provide real-time Q&A, interactive guidance, and highlighting of key features. The real estate transaction system 400 can also record the viewing session and capture buyer feedback for subsequent reference and comparison. **In** some embodiments, the remote property viewing module 430 further includes a 3D virtual interactive tour sub-module 432, which is configured to offer an immersive and interactive virtual viewing experience. The 3D virtual interactive tour sub-module 432 can integrate 3D scan data of the property and generate a virtual environment that the buyer can navigate. The user can click on different areas of the property (for example, living room, bedroom, kitchen, or balcony) in the graphical user interface to enter the corresponding space, and can perform panoramic rotations, move through the space, and zoom in or out. Moreover, the 3D virtual interactive tour sub-module 432 can integrate with the virtual agent interface 420, enabling the user to query information about the property in the virtual environment (for instance, whether a certain renovation was done, details about utilities, or lighting conditions) and receive voice or text responses from the virtual agent. Furthermore, the 3D virtual interactive tour sub-module 432 can provide a measurement tool that allows the user to measure interior dimensions, ceiling heights, or hallway widths, aiding in their evaluation and decision-making process.

To simplify post-offer administrative processes, the real estate transaction system 400 can further include a government integration module 440, which is operatively connected to the transaction completion module 114 and configured to assist users in completing official documents, subsidy applications, tax filings, land registration procedures, and similar tasks. The government integration module 440 can connect via secure links to relevant government agency platforms 70, such as tax offices, land registries, or housing bureaus. The system 400 can automatically retrieve and fill out government-mandated forms, provide guidance for filling them, and, given user authorization, submit those documents electronically. Specific examples include applications for home purchase subsidies, property transfer registration filings, or property tax payment submissions. The government integration module 440 can greatly reduce the time users spend on administrative tasks and the likelihood of errors.

In other embodiments, the real estate transaction system 400 can include AI-driven feedback and behavior analysis mechanisms to evaluate the overall user experience and system performance. These functions can include analyzing common points where users drop out of the transaction process, automatically sending satisfaction surveys at key milestones (such as after property viewing, during negotiation, or upon closing), collecting and compiling frequently raised concerns by buyers and sellers, and suggesting optimizations for the system interface or interaction flow based on behavior patterns. The data collected can be used internally to improve the interaction logic among the modules mentioned above, and can also serve as a basis for assessing service quality, thereby further refining standards for agents or third-party service providers.

In other embodiments, the real estate transaction system 400 may include several built-in security mechanisms to protect transaction integrity, user personal information, and financial security. Example implementations include:
- Integrating an escrow payment system to manage fund transfers securely;
- Automatically checking contract versions and consistency of terms;
- Implementing multi-factor authentication (with factors including biometrics) to prevent unauthorized access;
- Employing data encryption to protect sensitive information;
- Concealing users' sensitive information during early negotiation stages to protect privacy.

These measures ensure that the AI-enhanced real estate transaction system maintains a high level of trust and compliance even as processes become more automated.

In additional embodiments, the real estate transaction system 400 may include a land registration coordination module 450, which is configured to assist users in completing the administrative processes required for transferring property title. The land registration coordination module 450 can provide functions such as connecting to a list of certified conveyancers or land administration agents, offering an interface for selecting and scheduling an appointment with an agent, prompting and consolidating the list of documents that both buyer and seller need to prepare (for example, copies of identification cards, notarized seals or signature certificates, property transfer application forms), and exchanging data with the government integration module 440 so that required information can be directly forwarded to the chosen agent for submission. In some embodiments, the land registration coordination module 450 is also integrated with the legal consultation module 140 to help review whether contract terms meet regulatory standards and land registration requirements. With user authorization, the designated land agent can handle the application process, including booking the registration slot, managing in-person signing and sealing procedures, and providing outcome reports, thereby simplifying physical visits and improving user convenience and transaction efficiency.

In other embodiments, the real estate transaction system 400 can include a document auto-generation module 460. The document auto-generation module 460 is configured to automatically produce standard documents related to real estate transactions based on the property data provided by the user and external information retrieved by the system. For example, the document auto-generation module 460 can integrate building registry information, floor plan layouts, ownership details, and cadastral data to generate a standardized floor plan of the property. The user can preview and download this floor plan from the user interface 132, and adjust annotations if necessary. Additionally, the document auto-generation module 460 can automatically retrieve publicly available property registration data from government sources and compile a simplified property title report. This report can include information such as the current owner, zoning, building size, construction completion date, any mortgages or other encumbrances on the property, etc., enabling the buyer to evaluate the property's status beforehand.

Furthermore, the document auto-generation module 460 can assist the seller in drafting a listing agreement (sales agency contract). Based on the selected real estate agency, the module can automatically fill in the agency's name, listing period, commission rate, and other fields in the template, and integrate the basic information of both buyer and seller, providing a complete document ready for electronic signature or printing and signing. The user can preview the document on the platform, complete any additional fields, and then download it, eliminating the need to manually edit a document or obtain a template elsewhere. The document auto-generation module 460's features can also integrate with the virtual agent interface 420 and the legal consultation module 140 to help users immediately understand the content of documents and to highlight common contentious clauses, thereby improving document accuracy and legal compliance.

In other embodiments, the real estate transaction system 400 may further include a transaction dispute resolution module 470, which is configured to assist users during the transaction process or after transaction completion by providing reporting, categorization, assistance, and resource guidance for potential contract disputes, property defects, and other related issues. The transaction dispute resolution module 470 can be integrated with the legal consultation module 140 and the property safety module 150. When a user discovers inconsistencies in contract execution, fulfillment disputes, or uncovers significant undisclosed defects in the subject property (such as water leakage, wall cancer, structural cracks, etc.), the user can file an online report through the user interface 132. The real estate transaction system 400 can then automatically categorize the type of dispute and provide preliminary recommendations, such as reviewing the original contract content, offer records, and home inspection reports. The transaction dispute resolution module 470 can also provide complaint and mediation resources, such as links to cooperating legal advisors, real estate association complaint channels, or real estate dispute mediation centers.

In some embodiments, the transaction dispute resolution module 470 may further incorporate AI-assisted dialogue functions to help users clarify key points of the dispute and simulate the legal risks of different resolution options, thereby assisting users in deciding whether to proceed with formal legal proceedings. In addition, for property defects discovered after transaction completion, the transaction dispute resolution module 470 can be integrated with the property safety module 150 to provide a reporting platform, allowing the buyer 20 to upload photos, videos, or inspection reports, and to choose whether to request system assistance in arranging third-party appraisals. For issues covered under warranty clauses in the sales contract, the transaction dispute resolution module 470 can also automatically compare relevant terms and time limitations, prompting both buyer and seller regarding their respective obligations and the required procedures. Through the transaction dispute resolution module 470, the system not only enhances overall transaction security and service credibility, but also reduces post-transaction uncertainties for both parties, thereby maintaining platform reputation and protecting user rights.

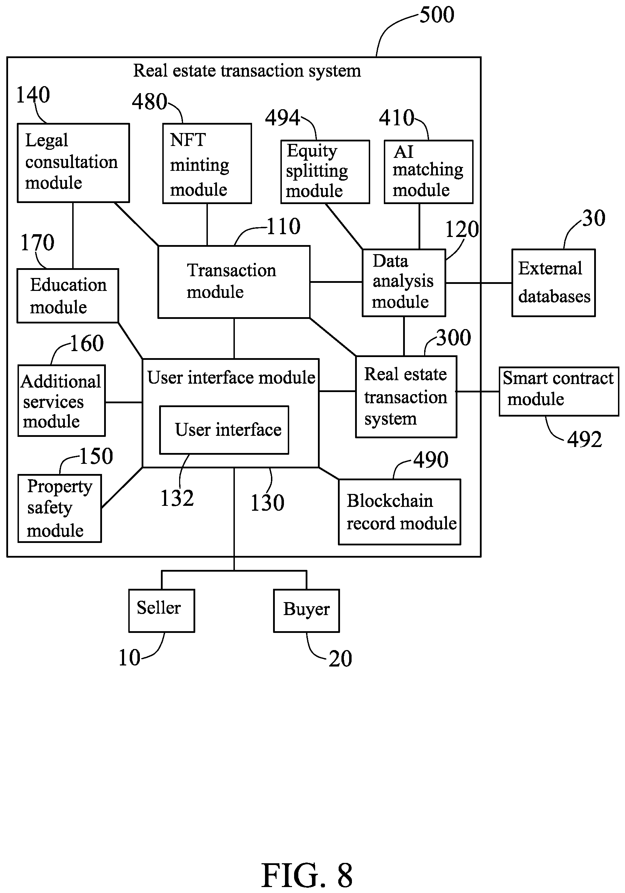

Referring to FIG. 8, which illustrates another embodiment of the invention, a real estate transaction system 500 is shown that combines blockchain and NFT (Non-Fungible Token) technology. Compared to the system 100 shown in FIG. 1, the system 500 adds an NFT minting module 480, a blockchain record module 490, a smart contract execution module 492, and an equity splitting module 494. These modules are respectively connected (e.g., via the system's internal network or software architecture) to the transaction module 110, user interface module 130, bank service module 310, and data analysis module 120, forming an advanced transaction platform with digital asset capabilities and on-chain governance features.

In this embodiment, the seller 10 may choose to enable an NFT minting function when listing a real estate property. If this function is enabled, the NFT minting module 480 will, based on the input property data (for example: location, ownership details, images, and descriptions), generate a unique digital asset identification code and upload it via the blockchain record module 490 to a specified blockchain platform (such as Ethereum or Polygon), thereby completing the minting of an NFT and mapping it to the property's title. This NFT can be considered a representation of the property's ownership in the system.

To ensure the transaction process is automated and tamper-proof, the smart contract execution module 492 provides a contract generation mechanism. It allows the buyer and seller to set certain conditions for the transaction of the NFT-backed property (such as payment amount, inspection period, payment schedule, closing deadline, etc.), which are then automatically compiled into a smart contract. This smart contract is deployed on the blockchain platform, and when all trigger conditions are satisfied (for example, the buyer's payment is completed and the bank appraisal is approved), it automatically triggers the transfer of the NFT and simultaneously completes the settlement of funds.

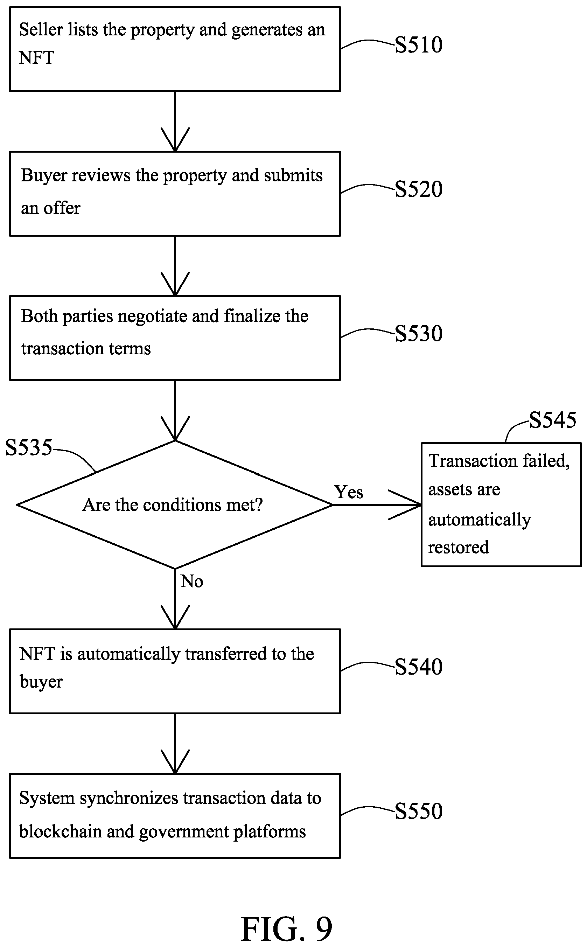

Referring to FIG. 9, which shows a flowchart of a real estate transaction in a second embodiment integrating NFT and smart contract technology, the specific process can include the following steps:
Step S510: The seller 10 lists a property via the user interface 132 and selects an option to generate an NFT. The NFT minting module 480 converts the property data into a unique NFT asset and writes it to the blockchain.
Step S520: The buyer 20 views the information of the property corresponding to the NFT on the platform and submits an offer; the offer conditions are compiled by the smart contract execution module 492 into a smart contract, and the contract is presented on both the buyer's and seller's interfaces.
Step S530: The parties negotiate and confirm the conditions, and the smart contract finalizes the transaction terms, locking the NFT and the corresponding funds.
Step S535: The smart contract execution module 492 automatically checks whether all predefined conditions have been met. If so, the process proceeds to Step S540; otherwise, it proceeds to Step S545.
Step S540: When all conditions are met (for example, payment is completed and any required tax or compliance checks are passed), the smart contract automatically completes the transfer of the NFT asset to the buyer's address, and the blockchain record module 490 updates the transaction record on the blockchain and stores proof of the transaction.
Step S545: If the transaction does not go through or is canceled under certain conditions, the digital property asset generated by the NFT minting module 480 is automatically returned to the seller 10's wallet address or account control, and any buyer pre-payments (such as deposits or earnest money) are also refunded via secure cryptocurrency payment channels to the original account.
Step S550: The system writes the data of the NFT transaction into local records and into the platform connected to the government integration module 440, for subsequent reference by the document generation module and the land registration coordination module.

In this embodiment, if the property is a divisible asset (for example, intended for crowdfunding investment or shared rental income), the real estate transaction system 500 can also have the equity splitting module 494 perform an NFT splitting operation, splitting a single NFT into multiple sub-NFTs or into fungible tokens (FTs) representing shares, which are allocated to multiple investors or partners in a rental arrangement. Each unit of the NFT or token can record the corresponding proportion, identity-linked information of the holder, and the profit-sharing logic. Through the smart contract module 492, after collecting rent, the system automatically disburses the rental income to each NFT holder's account according to their respective equity percentages.

In some configurations, the NFT transaction process can also integrate the appraisal result from the bank service module 310 as one of the conditions in the smart contract, to ensure that the transaction price is reasonable. The blockchain record module 490 supports a multi-chain architecture. To enhance security and compliance, this embodiment can optionally be configured with measures such as digital identity verification, KYC/AML verification, and cold wallet technologies to anchor digital assets to real identities and prevent risks of NFT loss. The system can also combine the blockchain data with the legal consultation module 140, such that during the smart contract creation process, the system prompts relevant risk clauses and offers legal review suggestions.

From the above, it is evident that the real estate transaction system 500 disclosed in this embodiment, by means of NFT-based digital ownership representation, automatic execution of conditions via smart contracts, and the immutable transparency of blockchain, effectively enhances transaction transparency and execution efficiency, further expanding the liquidity and international reach of real estate transactions. This new type of system can also be extended to scenarios of shared equity, real estate rental governance, and cross-border asset allocation, providing significant value to the overall real estate transaction ecosystem.

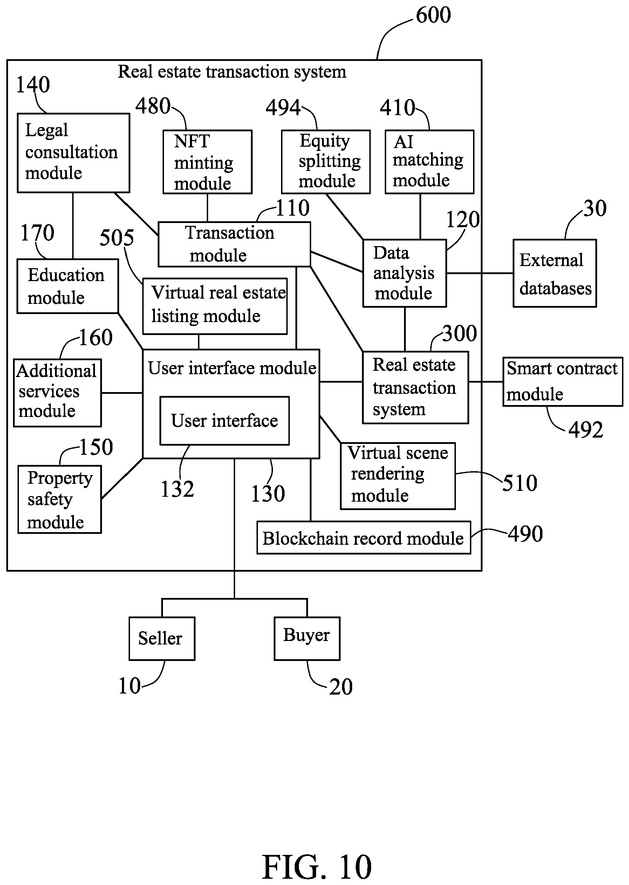

Although the embodiments described above are focused on physical real estate, the real estate transaction system of the present invention can also be applied to virtual real estate. Referring to FIG. 10, an embodiment of the system 600 further includes a virtual real estate listing module 505. The virtual real estate listing module 505 is configured to allow a user to list virtual real estate by providing information such as the corresponding virtual lot coordinates or on-chain asset identifier, a description of the property's virtual use or features, and an initial listing price. After completing the data input, the virtual real estate listing module 505 packages the relevant fields into a listing request, and includes the seller's blockchain wallet address, then transmits this package to the NFT minting module 480.

The NFT minting module 480, in accordance with the ERC-721 standard (or optionally ERC-1155), generates a unique token for the virtual real estate. The metadata for this token records at least: the virtual lot coordinates or asset code, area information, the corresponding GLTF model URI, the listing price and sale or lease status, as well as the owner's blockchain address. Subsequently, the blockchain record module 490 writes the IPFS hash of this metadata and the TokenID to a public blockchain (such as Ethereum or Polygon), and returns the transaction hash to ensure the data is verifiable and tamper-resistant.

Upon confirmation of the blockchain transaction, the transaction module 110 immediately updates the property listing and notifies the virtual scene rendering module 510 to load the corresponding 3D model. Both the seller and potential buyers can instantly view the appearance, spatial configuration, and environmental details of the virtual real estate through a browser or VR device. In this embodiment, for example, a land parcel with coordinates (812, -34, 27) may be used for illustration, with a 1.8 MB glTF 2.0 model file and an initial listing price of 15 ETH; after minting, the TokenID may be, for instance, 0x34B7...89Fa, and the entire process is completed on the Polygon blockchain.

Through the above mechanism, each virtual real estate is bound to a single NFT, ensuring unique ownership and preventing duplicate listings. The metadata format also complies with the requirements of metaverse platform SDKs such as Sandbox and Decentraland, facilitating future cross-platform display or transactions. Moreover, since all key events are recorded on the blockchain via smart contracts, the entire transaction record is transparent and traceable, and can also support subsequent time-locked leasing and revenue-sharing mechanisms.

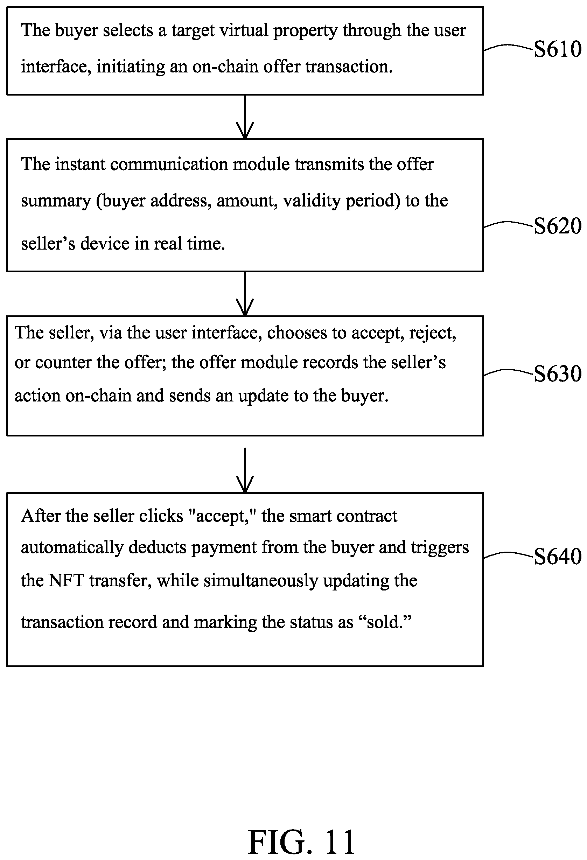

FIG. 11 illustrates the process of real-time price negotiation and transaction of virtual real estate. This process is based on the previously listed NFT. After the buyer 20 selects the virtual property via the user interface 132, the offer module 112 is used to enter the offer and select the payment currency (such as ETH or a platform stablecoin). The buyer signs the transaction digitally via MetaMask, generating an on-chain offer transaction (S610). Once the signature succeeds, the offer data is written to the smart contract's temporary pool and immediately triggers the push notification mechanism of the instant communication module 130, which sends an offer summary (including buyer address, offer amount, and validity period) to the seller 10's designated device or application (S620). At this point, the seller can accept, reject, or counter the offer on the same interface; the real estate transaction system 600 backend continues to record the seller's action to the contract's temporary pool and again sends a push notification to the buyer via the instant communication module 130 (S630). This online negotiation process can be completed within seconds, maximizing transaction efficiency.

When the seller clicks "accept offer," the smart contract execution module 492 automatically deducts the corresponding amount from the buyer's wallet and simultaneously triggers the NFT transfer logic (S640). Specifically, the contract, according to predefined conditions, on the one hand, allocates the received cryptocurrency between the seller's address and the platform fee address, and on the other hand, calls the ERC-721 safeTransferFrom function to transfer the real estate NFT from the seller's address to the buyer's address. Upon successful execution, a transaction hash (TxHash) is generated; the transaction completion module 140 immediately writes this hash back to the main database and the blockchain record module 490, and marks the virtual real estate as "sold."

A transaction completion message is simultaneously pushed to both parties, allowing the buyer to immediately see the newly received virtual real estate NFT in their asset list. If the NFT had been linked to a 3D model at the listing stage, the virtual scene rendering module 510 will also update permissions, allowing the buyer to decorate or display the property in VR or on the web. All transaction prices and timestamps are also sent to the data analysis module 120 for subsequent market trend curve updates and may be fed back to other users for reference in later negotiations.

As an example, suppose the seller originally lists the property at 15 ETH. The buyer submits an offer of 13 ETH with a validity period of 20 minutes. Upon receiving the platform's push notification, the seller responds within five minutes with a counteroffer of 14 ETH. The buyer then clicks "Accept" in the instant messaging window, and the smart contract immediately executes the payment deduction and NFT transfer. The entire process, from the first offer to transaction completion, takes only twelve minutes, with all message exchanges conducted via on-chain events and WebSocket push notifications, without manual review by a central server, thus ensuring decentralization and transparency.

Through this embodiment, the invention demonstrates the advantages of real-time price negotiation and closing for virtual real estate: (1) two-way instant communication significantly shortens negotiation time; (2) smart contracts ensure simultaneous delivery of funds and ownership, eliminating performance risk; and (3) transaction records are recorded on-chain and absorbed in real time by the data analysis module, immediately reflecting the latest market trends and optimizing subsequent pricing algorithms.

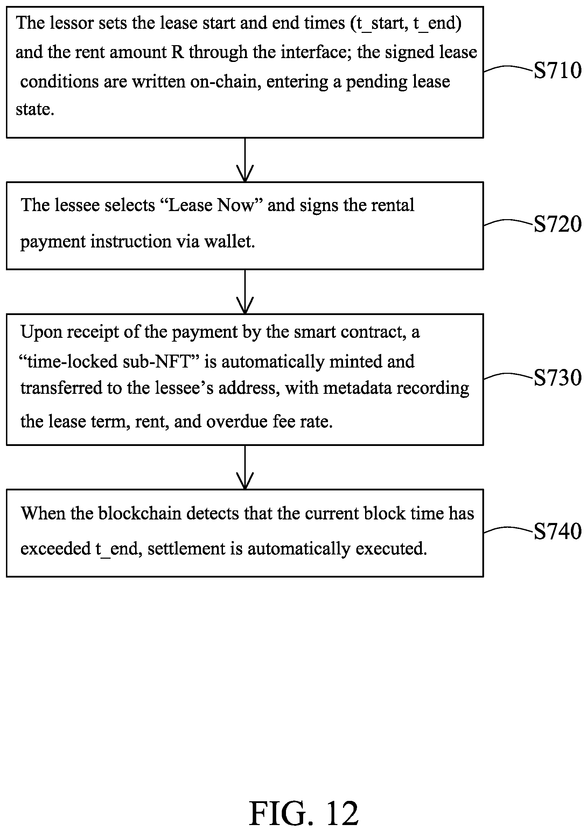

FIG. 12 further illustrates the application of the invention to "time-locked NFT leasing." When a seller (or lessor) holding a virtual real estate NFT wishes to lease out the asset, they may select the "Set Lease" function in the user interface 132 and enter the lease start and end times (t_start, t_end) and the rental amount R in the pop-up window. This action triggers the smart contract execution module 492 to write a "lease condition" into an on-chain temporary area and generate a temporary lease draft hash for subsequent verification. After the lease terms are set, the seller confirms and signs, and the above information is pushed to the blockchain, officially entering a pending lease status (S710).

On the tenant side, the real estate transaction system 600 instantly displays a "Leasable" label and corresponding terms on the property details page. When the tenant clicks "Lease Now," the offer module 110 requires the tenant to sign a payment instruction with their wallet (S720). Once the smart contract receives the payment instruction on-chain (e.g., 0.5 ETH as a sample rent), it automatically mints a "time-locked sub-NFT" and transfers it to the tenant's address (S730). The metadata of this sub-NFT, in addition to referencing the parent NFT TokenID, includes the lease start and end times, rent amount, overdue fee rate (e.g., 2%), and tenant public key, ensuring that any node can independently verify the validity of the lease.

During the lease term, the virtual scene rendering module 510 assigns the tenant permissions for displaying, modifying, or hosting activities within the virtual real estate based on on-chain permission tags. When blockchain nodes detect that the current block time exceeds t_end, the smart contract automatically initiates the settlement process (S740): first, destroying the sub-NFT; second, revoking scene permissions; third, if the contract detects the tenant has prepaid for renewal, it dynamically extends t_end and updates the metadata on-chain; if overdue without renewal, a 2% fee is deducted from the tenant's wallet and the property is marked as "available for lease" again.

Overall, this leasing mechanism achieves three significant results. First, time-locked sub-NFTs automatically record and constrain the lease term, avoiding traditional manual termination or disputes. Second, both rent and platform commission are automatically distributed at the contract level in a single transaction, and, as described in Claim 22, can be immediately paid proportionally to each NFT holder, enhancing transparency of revenue distribution. Lastly, all leasing records are stored on-chain and serve as real-time market data for the data analysis module 120, allowing the next round of pricing algorithms to adjust the virtual real estate rental and sales strategy, further optimizing the platform's overall liquidity and pricing accuracy.

In addition, the following describes the operational details of real-time virtual scene rendering and AR display in this embodiment. When a buyer or tenant selects a virtual real estate entry via the user interface 132, the real estate transaction system 600 first instructs the virtual scene rendering module 510 to parse the glTF 2.0 model URI stored in the on-chain metadata, and loads the model and its textures from a content delivery network using WebGL Streaming technology. By default, the virtual scene rendering module 510 plays the scene in a browser or standalone VR application at a target frame rate of sixty frames per second, and, if the model has not yet been fully loaded, it displays a low-resolution cache to ensure that the 3D scene is interactively operable within two seconds. Overall visual latency is kept below eighty milliseconds through frontend queue optimization and GPU instancing technology, to avoid user dizziness.

If the user clicks the "AR View" button on a mobile device, the virtual scene rendering module 510 detects the device environment; on iOS, it invokes ARKit, and on Android, it invokes ARCore, projecting a 1:100 scale virtual building into the real-world scene. The virtual scene rendering module 510 uses plane detection and light estimation so that the model is stably anchored to the desktop or floor with realistic lighting. As the user moves the device, the AR scene maintains sixty frames per second and automatically updates the parallax effect. In addition, if the model includes multiple floors, the user can expand the view floor-by-floor with a two-finger gesture to inspect the interior layout and furniture configuration.

In this embodiment, the virtual agent interface 160 is further integrated with the virtual scene rendering module 510 to provide an immersive voice-guided tour function. Once the user stays in the 3D scene beyond a preset threshold, the agent interface calls Google TTS or a local speech synthesis model to generate tour narration within 300 milliseconds, introducing the floor plan, past transaction records, and rental income. If the user submits a voice or text query (for example, "How many concurrent users can this building accommodate?"), the agent interface passes the command to the data analysis module 120 for an instant response, and the answer is displayed as a floating text box in the scene.

To ensure cross-platform performance, the real estate transaction system 600 slices large textures and ambient occlusion maps into multiple resolutions; if the device detects insufficient network speed or a lower-grade GPU, it automatically loads lower-resolution textures and enables mesh simplification. On high-end desktops or VR headsets, real-time panoramic ray tracing is enabled; on mobile devices in AR mode, static light baking is used to reduce computational load. Through these adaptive strategies, even mid-range phones can complete model loading within two seconds and maintain smooth operation.

By integrating WebGL/Unity/Unreal rendering pipelines with ARKit/ARCore depth sensing, this embodiment enables users to view virtual land and buildings in "augmented reality," while voice-guided tours enhance the sense of immersive interaction. All loading times, frame rates, and latency metrics are monitored in real time and reported to the data analysis module 120, facilitating subsequent platform performance statistics and adjustment of asset optimization strategies. Thus, this embodiment fully implements the features of 3D/VR interaction, AR display, and voice-guided tours, forming a complete and viable integrated business scenario together with the previously disclosed NFT ownership management and time-locked leasing functions.

Although the present invention has been disclosed above with preferred embodiments, these should not be construed as limiting the invention. Those skilled in the art may make various changes and modifications without departing from the spirit and scope of the invention, and the protection scope of the present invention should be determined by the claims attached hereto.

## Claims

1. A real estate transaction system, comprising:
a transaction module, comprising:
an offer module configured to:
allow a seller to list a property and specify a price and negotiation parameters for the listed property;
enable a buyer to submit an offer and directly participate in subsequent counteroffers online;
a transaction completion module configured to finalize the transaction once both parties agree on a price; and
an instant communication module configured to support communication between the buyer and the seller during negotiations;
a user interface module configured to provide a user interface for users to interact with the transaction module; and
a data analysis module configured to:
access and analyze multiple real estate transaction price data entries from at least one external database; and
generate and display multiple price trend analyses, wherein the price trend analyses are derived from the real estate transaction price data and include historical price and market trend information;
provide guidance for setting or suggesting accurate property prices based on the price trend analyses;
wherein the data analysis module, via a pricing algorithm, integrates current market conditions, historical transaction data, and similar property information to assist a user, including the buyer and the seller, in making informed pricing decisions during negotiations;
wherein the transaction module further comprises a pricing assistant connected to the data analysis module and configured to provide the seller with current market conditions and price trends to help the seller set a competitive price reflective of prevailing conditions;
wherein the property is a physical real estate or virtual real estate; and
wherein, when the property is virtual real estate, the data analysis module via the pricing algorithm further integrates on-chain transaction information, virtual lot coordinates or asset codes to help the seller set a competitive price reflective of current conditions.

2. The real estate transaction system of claim 1, wherein the instant communication module is further configured to:
notify the seller upon receiving an offer; and
inform the buyer of newly listed properties according to the buyer's preferences;
and wherein the user interface module is further configured to provide real-time updates and progress tracking for ongoing real estate transactions.

3. The real estate transaction system of claim 1, further comprising:
a legal consultation module configured to provide instant connection to legal resources and consultation to assist the buyer or the seller in understanding real estate transaction-related legal issues, wherein the legal consultation module provides online legal consultation services by connecting the user with at least one legal expert from a government department or a law firm;
a property safety module configured to assist the user in requesting additional property inspections and to provide corresponding inspection reports online;
an additional services module configured to enable the user to request and schedule additional services, allowing the user to select from a series of extra services including renovation, moving, cleaning, and appliance setup;
an education module configured to provide multiple real estate transaction-related learning materials and resources to the user, and wherein based on the user's personal data and prior interactions with the education module, the education module suggests a personalized learning path to guide the user through topics and resources matching the user's interests and needs; and
a bank service module, the bank service module configured to:
enable the buyer to apply for a bank appraisal service to determine a loan amount; and
facilitate online payment transactions related to a property deposit and final settlement;
wherein the bank service module is further configured to enable the seller to apply for a bank appraisal service to evaluate the listed property's reference value.

4. The real estate transaction system of claim 1, further comprising:
a matching module configured to match the buyer and the seller with multiple real estate agents based on the property and user preferences; and
an agent rating module configured to:
collect user ratings and feedback on real estate agents; and
evaluate performance of the real estate agents;
wherein the matching module is further configured to optimize pairing of real estate agents with the buyer and the seller using a combination of geographic location, specific user preferences, and agent performance ratings provided by the agent rating module.

5. The real estate transaction system of claim 1, further comprising an AI matching module operatively connected to the data analysis module, the AI matching module configured to store buyer preferences and proactively compare newly listed or externally sourced properties with the stored preferences; wherein the AI matching module is further configured to identify and retrieve property listings from third-party real estate platforms or social media based on the buyer's criteria.

6. The real estate transaction system of claim 1, further comprising a virtual agent interface operatively connected to the user interface module, the virtual agent interface configured to simulate the role of a real estate agent through a virtual character, avatar, or voice assistant to guide the user through property searching, negotiation, and transaction processes.

7. The real estate transaction system of claim 1, further comprising a remote property viewing module operatively connected to the user interface module, the remote property viewing module configured to enable real-time virtual property viewing through streaming video, robotic devices, or smart lock access systems;
wherein the remote property viewing module further comprises a 3D virtual interactive tour sub-module, the 3D virtual interactive tour sub-module configured to:
provide an immersive virtual property viewing interface that allows a user to click different areas in a graphical user interface to enter corresponding spaces and perform panoramic rotation, movement, and zoom operations;
integrate a virtual agent interface to respond in real-time to the user's inquiries about property information; and
provide a measurement tool for the user to measure indoor space dimensions.

8. The real estate transaction system of claim 1, further comprising:
a government integration module operatively connected to the transaction completion module,
the government integration module configured to assist the user in completing and submitting official documents related to real estate transactions, taxes, or subsidy applications, wherein said submission is performable via an API connection or downloadable forms; and
a land registration coordination module configured to assist the user in selecting and scheduling a land administration agent, and to integrate prompts and compilation of documents required for property title transfer registration, through connection with the government integration module to complete data exchange and submission.

9. The real estate transaction system of claim 1, further comprising:
a smart contract execution module;
an NFT minting module configured to automatically generate a uniquely coded digital asset from the property information listed by the seller and, upon transaction completion, to trigger transfer of the digital asset via the smart contract execution module; and
a blockchain record module, wherein the NFT minting module is connected to the blockchain record module, the blockchain record module configured to store, on a blockchain network, real estate data including title information, transaction history, and rental records;
wherein the smart contract execution module is configured to trigger transfer of a real estate NFT and corresponding payment upon fulfillment of predefined conditions, and is integrated with a cryptocurrency payment channel;
wherein the smart contract execution module, upon receiving rental payments, automatically disburses digital rental income to each NFT holder according to an equity split ratio; and
wherein the smart contract execution module further supports a time-locked NFT rental contract that automatically reverts or renews upon lease expiration.

10. The real estate transaction system of claim 1, further comprising:
a virtual real estate listing module configured to:
allow a user to list virtual real estate corresponding to virtual lot coordinates or on-chain asset identifiers; and
concurrently display a 3D building preview, listing status, and blockchain record of the virtual real estate;
a virtual scene rendering module that utilizes Unity, Unreal Engine, or WebGL/VR technology to render a 3D/VR interactive view of the virtual real estate in real time;
wherein the virtual scene rendering module further supports augmented reality (AR) virtual building display and provides voice-guided interaction.
